# FASCICULE DE BREVET EUROPEEN

(11) **EP 0 940 745 B1**
(45) Date de publication et mention de la délivrance du brevet: **11.05.2005**
(21) Numéro de dépôt: 99400078.4
(22) Date de dépôt: 14.01.1999
(51) Int. Cl.: G06F 9/44

(54) **Procédés de stockage et de dépaquetage des attributs d'un objet**
Verfahren zur Speicherung und Auspacken von Objektattributen
Method for storing and unpacking object attributes

(30) Priorité: 05.03.1998 FR 9802685
(43) Date de publication de la demande: 08.09.1999
(73) Titulaire: ALCATEL, 75008 Paris (FR)
(72) Inventeur: Theodora, Eric, 91940 Les Ulis (FR); Aidan, Bruno, 95210 Saint Gratien (FR)
(74) Mandataire: Lamoureux, Bernard

(56) Documents cités:
- EP-A- 0 631 229
- EP-A- 0 690 375
- "AUTOMATIC RESOLUTION OF DEPENDENT OBJECTS IN A DATA SYSTEM" IBM TECHNICAL DISCLOSURE BULLETIN, vol. 37, no. 6B, 1 juin 1994, pages 513-515, XP000456082

## Description

La présente invention concerne un procédé pour stocker les données associées à un objet (au sens de la programmation orientée objet) dans une autre structure de données, appelée paquet.

Elle concerne aussi un procédé pour dépaqueter cette autre structure de données pour reconstruire un objet similaire à l'objet initial.

L'invention trouve une application pour la transmission d'un objet à travers un réseau informatique, ou pour son stockage sur un support de données.

La programmation orientée objet s'articule principalement autour des concepts de classe, d'objet et d'héritage.

D'une façon très générale, un objet peut être vu comme une structure comportant un ensemble de données (appelées attributs) et un ensemble de traitements permettant de les manipuler (appelés méthodes). Chaque objet est une instance d'une classe.

L'héritage est une relation entre deux classes dans laquelle l'une est considérée comme l'ancêtre de l'autre. Une classe A héritant d'une classe B hérite de tous ses attributs et méthodes.

Le lecteur peut trouver des définitions plus complètes de ces différents concepts dans différents ouvrages traitant de la programmation orientée objet. On peut par exemple citer *Object-Oriented Design With Applications* de Booch et Grady, 1991, ou bien *The C++ Programming Language (2*^{*nd*} *edition)* de Bjarne Stroupstrup, 1991, ou encore dans *Dictionary of Computing,* Oxford University Press, 1990.

Consulter aussi EP-0 631 229: Méthode de mémorisation des attributs d'un objet.

De la notion d'héritage, on déduit qu'un attribut (ou une méthode) associé à un objet particulier peut être soit local à la classe correspondant à cet objet, soit hérité d'une classe parente de cette classe.

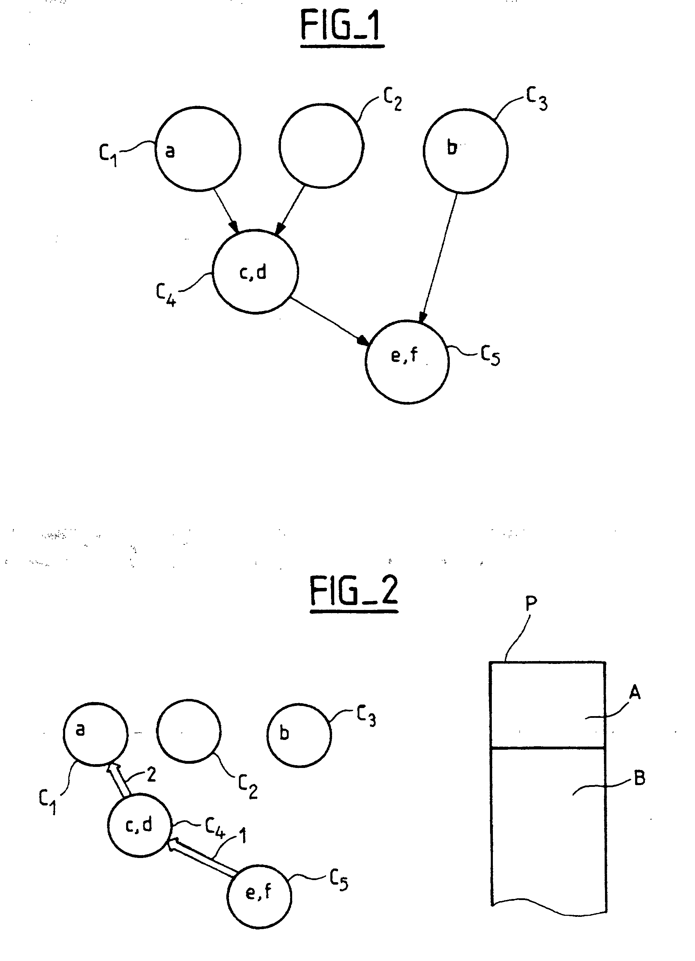

Afin de rendre ce concept plus clair, on peut se référer à la figure 1 jointe qui représente un exemple d'arbre d'héritage. La classe C₅ hérite des deux classes C₃ et C₄. Cette dernière hérite des classes C₁ et C₂. Les attributs associés à la classe C₅ sont e et f, qui sont des attributs locaux, ainsi que a, b, c et d qui sont hérités des classes C₁, C₃ et C₄.

Par conséquent, stocker les valeurs des attributs associés à un objet ne peut pas se faire en s'intéressant uniquement à cet objet. Il est au contraire nécessaire de considérer l'intégralité de l'arbre d'héritage dont sa classe fait partie.

Un premier but de la présente invention consiste à proposer un procédé permettant de stocker les valeurs des attributs associés à un objet dans une autre structure de données (appelée paquet) afin de faciliter le transfert de ces valeurs sur un réseau ou leur stockage sur un support de données.

À cette fin, l'invention a pour objet un procédé de stockage dans un paquet, des attributs associés à un objet dont la classe correspondante fait partie d'un arbre d'héritage, chacune des classes contenues dans ledit arbre d'héritage comportant une méthode de stockage comportant un paramètre index, ladite méthode réalisant les étapes consistant à :
- appeler les méthodes de stockage des classes parentes si elles existent, en incrémentant le paramètre index,
- mettre dans le paquet, à l'adresse déterminée par le paramètre index, la première adresse libre dans le paquet,
- copier les attributs de la classe courante dans le paquet à partir de la première adresse libre, ainsi qu'un identifiant de la classe courante,
et le procédé consistant à appeler la méthode de stockage de la classe correspondante, avec la valeur nulle pour ledit paramètre index.

Un second but de la présente invention consiste à proposer un procédé permettant de dépaqueter les attributs ainsi stockés afin de reconstruire l'objet initial. Pour cela, le procédé selon l'invention comporte les étapes suivantes :
- appeler les constructeurs des classes parentes si elles existent, en fixant la valeur du paramètre index,
- récupérer dans ledit paquet, à l'adresse déterminée par le paramètre index, une adresse de données,
- récupérer les valeurs des attributs dans le paquet, à l'adresse de données.

Les différents avantages et caractéristiques de l'invention apparaîtront de façon plus claire dans la description qui va suivre en référence aux figures annexées.

La figure 1, déjà décrite, illustre un exemple d'arbre d'héritage.

Les figures 2 à 4 illustrent les différentes étapes de l'application d'une mise en oeuvre du procédé d'empaquetage selon l'invention, à l'exemple d'arbre d'héritage proposé.

La figure 2 illustre l'appel récursif que représente la première étape mise en oeuvre par la méthode de stockage : chaque méthode de stockage appelle la méthode de stockage d'une classe parente jusqu'à que l'on soit arrivé à une racine de l'arbre d'héritage.

Le procédé débute avec l'appel de la méthode de stockage de la classe correspondant à l'objet que l'on veut empaqueter. Le paramètre index vaut alors 0.

Afin de permettre de connaître lors du dépaquetage, la classe de l'objet empaqueté, un identifiant de cette classe peut être stocké dans ce paquet, par exemple dans un entête.

Cette étape n'est toutefois pas obligatoire car le contexte peut lever toute ambiguïté sur l'identité de l'objet stocké dans le paquet.

Sur la figure 2, on voit que la méthode de stockage de la classe C₅ dont on veut empaqueter une instance appelle en premier lieu la méthode de stockage de la classe C₄ (référence 1 sur la figure). À ce stade, le paramètre index avec lequel on appelle la méthode de stockage vaut 1.

Il est à noter que le procédé selon l'invention ne dépend aucunement de l'ordre dans lequel sont appelées les méthodes de stockages des classes parentes. Ainsi, dans cet exemple, la méthode de stockage de la classe C₃ aurait très bien pu être d'abord appelée sans que le résultat ait été différent.

De la même façon, la méthode de stockage de la classe C₄ appelle, par exemple, la méthode de stockage de la classe C₁ avec 2 comme valeur du paramètre index (étape référencée 2).

La classe C₁ n'a pas d'ancêtre. Aussi, l'appel récursif cesse, et cette méthode exécute ses étapes suivantes.

Ces étapes suivantes peuvent être mises en oeuvre de différentes façons.

Selon une mise en oeuvre particulière, le paquet comporte deux parties qui se succèdent : respectivement, une première partie appelée bloc d'adresses (A), et une seconde partie appelée corps (B pour *body* en anglais). C'est cette mise en oeuvre qui sera décrite dans la suite, mais d'autres mises en oeuvre sont possibles, notamment en intervertissant l'ordre des première et seconde parties.

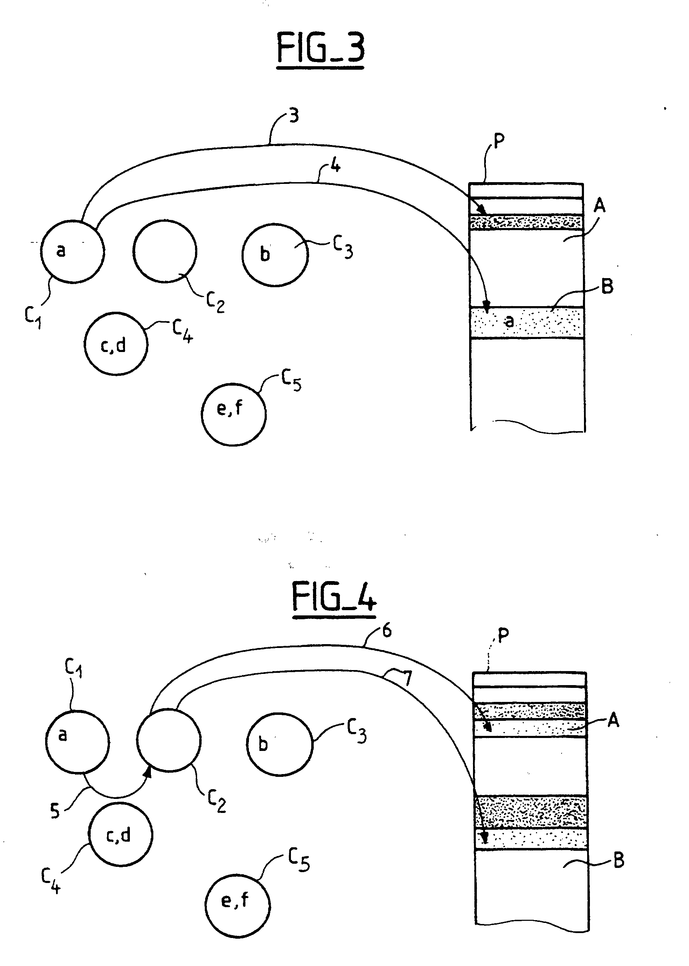

L'étape référencée 3 sur la figure 3 consiste à mémoriser dans le bloc d'adresses, l'adresse de la première partie libre du corps du paquet. La zone du bloc d'adresses dans laquelle ladite adresse doit être inscrite est déterminée par le paramètre index.

Dans le cas concret de l'exemple décrit, la valeur de l'index vaut 2. Aussi, la zone peut être celle dont l'adresse relative, par rapport au début du bloc d'adresses, vaut 2 (soit la troisième zone puisque l'on démarre de l'adresse 0).

L'adresse à inscrire dans cette zone est celle de la première partie libre du corps du paquet, c'est-à-dire, ici, l'adresse du début du corps (B).

L'étape référencée 4 consiste à copier à partir de cette dernière adresse, les valeurs des attributs propres à la classe courante, i.e. à la classe C₁. La valeur de l'attribut « a » est donc stockée à partir de cette adresse. Un identifiant de la classe courante (i.e. la classe C₁) est aussi stocké afin de permettre le dépaquetage du paquet.

La méthode de stockage de la classe C₁ se termine alors, et l'exécution de la méthode de stockage de la classe C₄ reprend.

La figure 4 représente les étapes suivantes de cette mise en oeuvre de l'invention. L'étape référencée 5 représente la terminaison de la méthode de stockage de la classe C₁ et l'appel de la méthode de stockage de la classe C₅ par la méthode de stockage de la classe C₄.

Lors de l'appel de la méthode de stockage de la classe C₂, le paramètre index est de nouveau incrémenté et vaut donc 3.

Comme précédemment, la valeur de la première adresse libre du corps du paquet (B) est stockée dans la zone appropriée du bloc (A) d'adresses (étape 6).

La première adresse libre du corps du paquet est celle du début du corps plus la taille des données formées par les attributs de la classe C₁ et l'identifiant de cette classe C₁.

La zone appropriée du bloc d'adresses est celle repérée par le paramètre index, soit la 4^{e} zone.

Après le stockage des attributs et de l'identifiant de la classe C₂ dans la partie du corps appropriée (étape 7), la méthode de stockage de la classe C₂ se termine, et la méthode de stockage de la classe C₄ peut poursuivre son exécution.

Nous ne poursuivrons pas l'explication des étapes suivantes de l'application du procédé selon l'invention à l'exemple proposé, ce déroulement étant à la portée de l'homme du métier.

Le dépaquetage des paquets formés par le procédé qui vient d'être décrit, se fait de façon assez similaire à ce procédé. Son but est de lire les données contenues dans un paquet afin de recréer l'objet.

Dans un premier temps, la classe correspondant à l'objet à dépaqueter est déterminée. Comme dit précédemment, un identifiant de cette classe peut être stocké dans un entête du paquet, et cette détermination peut se faire par lecture de cet identifiant.

Le constructeur de cette classe est alors appelé.

L'étape suivante consiste à appeler les constructeurs des classes parentes de la classe correspondant à l'objet, avec une valeur du paramètre index qui est cohérente avec celle utilisée par la méthode de stockage.

Cette cohérence peut être obtenue en utilisant une règle d'appel des constructeurs des classes parentes. Par exemple, on peut commencer par les classes parentes situées à la droite sur l'arbre d'héritage pour finir par celles situées à gauche.

L'étape suivante consiste à lire dans l'emplacement déterminé par le paramètre index, une autre adresses, dite adresse de données.

Cette adresse pointe vers une zone dans le corps (B) du paquet, qui contient les données propres à la classe courante.

L'étape suivante consiste donc à lire ces données et à les affecter à l'objet en cours de création.

Ainsi qu'expliqué précédemment pour le stockage de l'objet, le mécanisme des appels récursifs fait en sorte que toutes les classes de l'arbre d'héritage sont parcourues.

## Revendications

1. Procédé de stockage dans un paquet, des attributs associés à un objet dont la classe correspondante fait partie d'un arbre d'héritage, chacune des classes contenues dans ledit arbre d'héritage comportant une méthode de stockage comportant un paramètre index, ladite méthode réalisant les étapes consistant à :
• appeler les méthodes de stockage des classes parentes si elles existent, en incrémentant ledit paramètre index,
• mettre dans ledit paquet, à l'adresse déterminée par ledit paramètre index, la première adresse libre dans ledit paquet,
• copier les attributs de la classe courante dans ledit paquet à partir de ladite première adresse libre, ainsi qu'un identifiant de ladite classe courante,
et ledit procédé consistant à appeler la méthode de stockage de ladite classe correspondante, avec la valeur nulle pour ledit paramètre index.

2. Procédé selon la revendication précédente, **caractérisé en ce que** un identifiant de ladite classe correspondante est stocké dans ledit paquet.

3. Procédé selon l'une des revendications précédentes, **caractérisé en ce que** ledit paquet comporte, un bloc d'adresses, de taille prédéterminée, contenant lesdites premières adresses libres, et un corps contenant lesdits attributs.

4. Procédé de dépaquetage d'un paquet formé par un procédé conforme aux revendications précédentes, chacune desdites classes comportant un constructeur comportant un paramètre index, réalisant les étapes ordonnées suivantes :
• appeler les constructeurs des classes parentes si elles existent, en fixant la valeur dudit paramètre index,
• récupérer dans ledit paquet, à l'adresse déterminée par ledit paramètre index, une adresse de données,
• récupérer les valeurs des attributs dans ledit paquet, à ladite adresse de données.

## Patentansprüche

1. Verfahren zum Speichern eines Pakets, dessen zugehörige Klasse Bestandteil eines Vererbungsbaumes ist, wobei jede der im besagten Vererbungsbaum enthaltenen Klassen ein Speicherungsverfahren beinhaltet, welches einen Indexparameter beinhaltet, und wobei das besagte Verfahren in Schritten abläuft, welche darin bestehen,
• die Speicherungsverfahren der übergeordneten Klassen aufzurufen, sofern sie existieren, und dabei den Indexparameter zu inkrementieren,
• in das besagte Paket an der durch den besagten Indexparameter festgelegten Adresse die erste freie Adresse im besagten Paket einzugeben und
• die Attribute der laufenden Klasse von der besagten ersten freien Adresse an sowie einen Identifier der laufenden Klasse in das Paket zu kopieren,
und wobei das Verfahren darin besteht, das Speicherungsverfahren der zugehörigen Klasse mit dem Wert null für den besagten Indexparameter aufzurufen.

2. Verfahren gemäß Anspruch 1, **dadurch gekennzeichnet, daß** ein Identifier der besagten zugehörigen Klasse im besagten Paket gespeichert wird.

3. Verfahren gemäß einem der vorgenannten Ansprüche, **dadurch gekennzeichnet, daß** das besagte Paket einen Adressenblock von zuvor festgelegter Größe, welcher die besagten freien Adressen enthält, sowie einen Paketkörper, welcher die besagten Attribute enthält, beinhaltet.

4. Verfahren zum Auspacken eines durch ein Verfahren gemäß den vorgenannten Ansprüchen gebildeten Pakets, wobei jede der besagten Klassen einen Erzeuger mit einem Indexparameter beinhaltet, und wobei die im folgenden vorgeschriebenen Schritte ausgeführt werden,
• die Erzeuger der übergeordneten Klassen aufzurufen, sofern sie existieren, und dabei den Wert des besagten Indexparameters festzulegen,
• im besagten Paket an der durch den besagten Indexparameter festgelegten Adresse eine Datenadresse zurückzugewinnen und
• die Werte der Attribute im besagten Paket an der Datenadresse zurückzugewinnen.

## Claims

1. A method of storing in a packet attributes associated with an object corresponding to a class that is part of an inheritance tree, each class in said inheritance tree including a storage method including an index parameter, said method comprising the following steps:
• calling storage methods of parent classes, if any, incrementing said index parameter,
• placing a first free address in said packet into said packet at an address determined by said index parameter, and
• copying attributes of the current class into said packet from said first free address with an identifier of said current class,
and said method calling the storage method of said corresponding class with a null value of said index parameter.

2. A method according to the preceding claim, **characterised in that** an identifier of said corresponding class is stored in said packet.

3. A method according to either of the preceding claims, **characterised in that** said packet includes an address block of predetermined size containing said first free addresses and a body containing said attributes.

4. A method of depacketing a packet formed by a method in accordance with the preceding claims, each of said classes including a builder including an index parameter, said method including the following steps in the following order:
• calling the builders of parent classes, if any, fixing the value of said index parameter,
• recovering a data address in said packet at an address determined by said index parameter,
• recovering values of attributes in said packet at said data address.
